# EUROPEAN PATENT APPLICATION

(11) **EP 2 808 919 A1**
(43) Date of publication of application: **03.12.2014**
(21) Application number: 12866775.5
(22) Date of filing: 21.12.2012
(51) Int. Cl.: H01M 2/10, E05B 19/00, H05K 5/02

(54) **BATTERY HOLDER**

(30) Priority: 24.01.2012 JP 2012012254
(71) Applicant: Kabushiki Kaisha Tokai Rika Denki Seisakusho, Ohguchi-cho Niwa-gun Aichi 480-0195 (JP)
(72) Inventor: NISHIDA, Kota, Niwa-gun Aichi 480-0195 (JP); KOGA, Shinichi, Niwa-gun Aichi 480-0195 (JP)
(74) Representative: TBK
(86) International application number: PCT/JP2012/083319
(87) International publication number: WO 2013/111488

(57) **Abstract**

A battery holder (10) includes a terminal component (20) electrically connected to one electrode of a battery (15) and a battery restraining part (53) that is separate from the terminal component (20). The terminal component includes: a fixed portion (21) fixed to a mounting surface; an arm portion (22) extending from the fixed portion (21) to come into contact with said electrode; and a cutout portion (27) opened toward the battery (15) in said arm portion. The battery restraining part (53) is located between the terminal component (20) and the battery (15) while being received by the cutout portion (27), in order to accept an impact load from the battery (15).

## Description

The present invention relates to a battery holder.

Patent Document 1 describes an example of an electronic key device that includes a battery holder. Fig. 11 shows a conventional battery holder 81. The battery holder 81 includes a terminal component 84 that holds a button battery 83. The terminal component 84 includes a soldered portion 85, which is soldered and fixed to a board 82.

Patent Document 1: Japanese Laid-Open Patent Publication No. 2005-240380

When the electronic key device is dropped, the battery 83 applies a relatively large impact load Fk to the terminal component 84. A large stress corresponding to the impact load Fk is generated at the soldered portion 85 of the terminal component 84. This may result in delamination of the soldered portion 85 from the board 82 and cause the terminal component 84 to fall off from the board 82.

It is an object of the present invention to provide a battery holder having an increased impact resistance.

One aspect of the present invention is a battery holder including a terminal component, which is electrically connected to one electrode of a battery, and a battery brace, which is discrete from the terminal component. The terminal component includes a fixed portion fixed to a mounting surface, an arm that extends from the fixed portion and contacts the electrode of the battery while supporting the battery, and a slot in the arm. The slot is open toward the battery. The battery brace is received by the slot and located between the terminal component and the battery to receive an impact load from the battery.

In one example, the battery holder includes a case that covers the terminal component. The battery brace is a plate-shaped projection formed in the case at a position corresponding to the slot of the terminal component. The battery brace includes a contact surface that contacts the battery to receive an impact load from the battery.

In one example, the battery brace includes a guide surface that presses the battery to guide the battery from a temporary mounting position, where the battery does not contact the contact surface, to a final mounting position, where the battery contacts the contact surface.

In one example, the case includes a pillar that restricts movement of the battery from the final mounting position in a removal direction.

In one example, the battery holder further includes a board including the mounting surface. The fixed portion of the terminal component is fixed to the mounting surface of the board, and the pillar includes a distal portion that contacts the mounting surface of the board.

A preferable example of a battery holder includes a positive terminal component and a non-conductive member discrete from the positive terminal component. The positive terminal component includes a fixed portion, which is fixed to a mounting surface, and at least one contact, which contacts a positive electrode of a button battery. The positive terminal component includes a slot that allows the non-conductive member to contact a side surface of the button battery at a location separated from the at least one contact. The non-conductive member projects toward the side surface of the button battery from the positive terminal component through the slot.

Preferably, the non-conductive member includes a contact surface that contacts the side surface of the button battery at a location separated from the at least one contact.

A further aspect of the present invention provides an electronic device and a remote control key device including the battery holder.

The present invention obtains a battery holder having an increased impact resistance.
Fig. 1 is a front view of a remote control key device for a vehicle.
Fig. 2 is an exploded perspective view of an operation unit of the remote control key device.
Fig. 3 is an exploded perspective view of a transmission module including a battery holder according to one embodiment of the present invention.
Fig. 4 is a partial perspective view of the battery holder.
Fig. 5 is a cross-sectional view of the battery holder shown in Fig. 4.
Fig. 6 is a perspective view of a lower case of the transmission module.
Fig. 7 is a perspective view of a button battery and a positive terminal arranged in the lower case.
Fig. 8 is a cross-sectional view of the transmission module.
Fig. 9 is a perspective view showing one step for assembling the transmission module.
Fig. 10 is a perspective view of the transmission module.

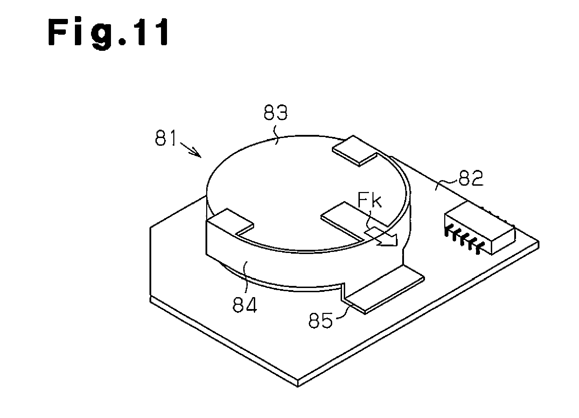

Fig. 11 is a perspective view of a conventional battery holder.

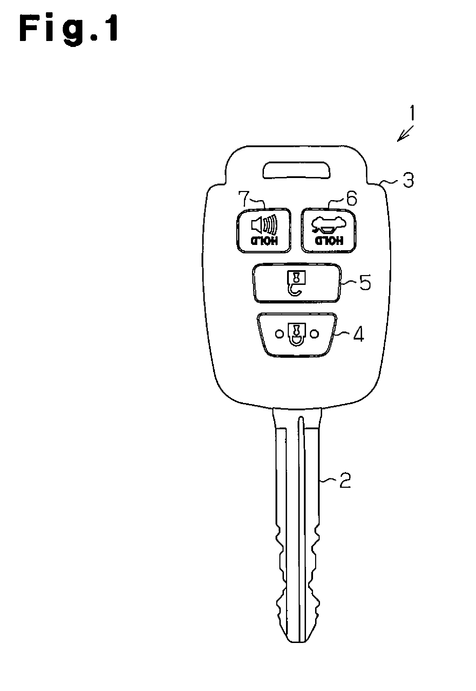

A battery holder according to one embodiment of the present invention will now be described. As shown in Fig. 1, a battery holder is arranged in a remote control key device for a vehicle.

As shown in Fig. 1, the remote control key device 1 includes a blade 2 and a grip, or an operation unit 3. The blade 2 includes a key groove that conforms to, for example, a door lock. An operator of the remote control key device 1 holds the operation unit 3 and inserts the blade 2 into the door lock or the like to mechanically lock or unlock the door. One or more operation buttons are arranged on the operation unit 3. In the illustrated example, the operation buttons include a lock button 4, an unlock button 5, a trunk unlock button 6, and a panic button 7. The remote control key device 1 transmits a wireless signal corresponding to a pressed operation button. The vehicle electrically verifies the wireless signal transmitted from the remote control key device 1. When the wireless signal is verified, an operation such as the locking or unlocking of a door is performed or permitted. For example, when the lock button 4 is pressed, the remote control key device 1 transmits a wireless lock signal for electrically locking a door. When the unlock button 5 is pressed, the remote control key device 1 transmits a wireless signal for electrically unlocking the door. When the trunk unlock button 6 is pressed, the remote control key device 1 transmits a wireless signal for unlocking the trunk at the rear portion of the vehicle. When the panic button 7 is pressed, the remote control key device 1 transmits a wireless signal that instructs for a notification action to be performed using sound or light.

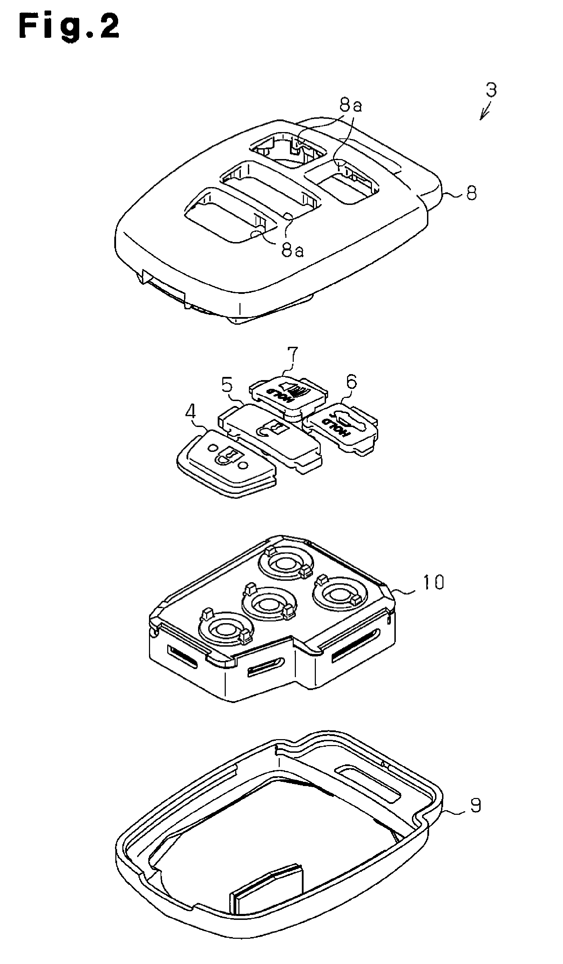

As shown in Fig. 2, an operation unit 3 includes a housing and a transmission module 10, which is accommodated in the housing. The housing has, for example, a two-part structure including an upper housing 8 and a lower housing 9. The operation buttons 4, 5, 6, and 7 are coupled to the upper housing 8 from the inner side. The operation buttons have ornamental surfaces exposed through button windows 8a of the upper housing 8.

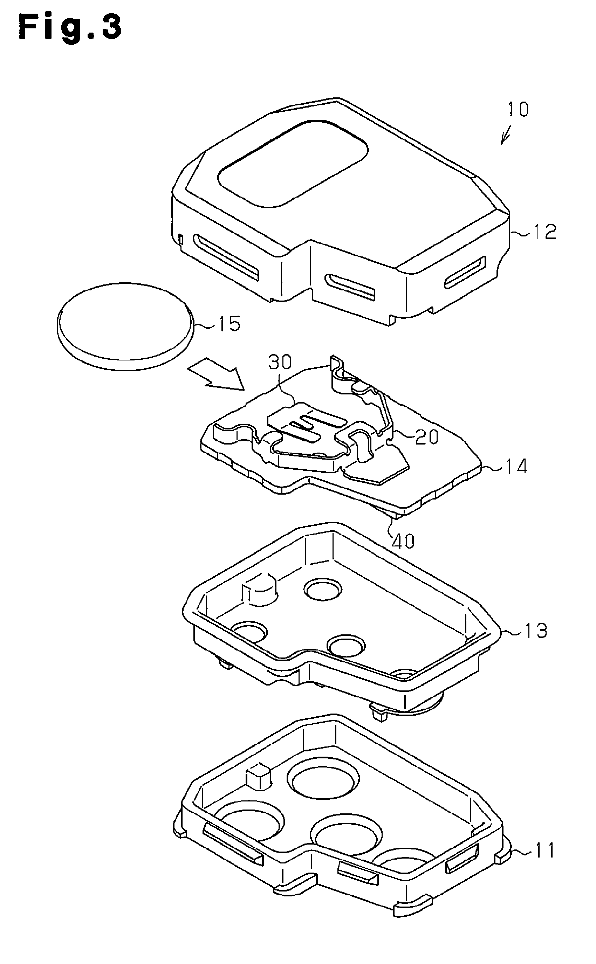

As shown in Fig. 3, the transmission module 10 includes an upper case 11, a lower case 12, a packing 13, which is arranged in the upper case 11, and a printed board 14, which is arranged in an accommodation space of the packing 13. The upper case 11 and the lower case 12 form a case having a two-part structure. The printed board 14 includes electrical components (not shown). The transmission module 10 shown in Fig. 3 is reversed upside-down in Fig. 2. In the description of the present embodiment, the side from which the ornamental surfaces of the operation buttons are exposed is referred to as an upper side of the remote control key device 1. In a preferable embodiment, the cases 11 and 12 are formed from elastic resin materials, and the packing 13 cooperates with the cases 11 and 12 to make the transmission module 10 waterproof.

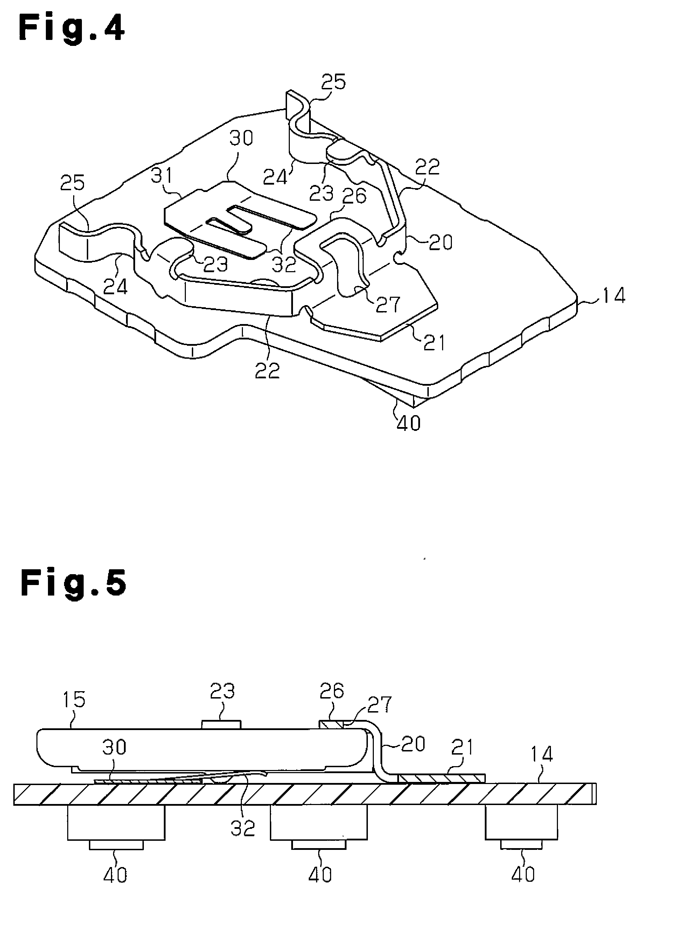

As shown in Figs. 4 and 5, a positive terminal component 20 and a negative terminal component 30 are coupled to one mounting surface of the printed board 14, for example, an upper mounting surface of Fig. 5. The positive terminal component 20 includes at least one contact electrically connected to a positive electrode of the button battery 15, which is a power supply of the remote control key device 1. The negative terminal component 30 includes at least one contact electrically connected to a negative electrode of the button battery 15. The terminal components 20 and 30 are electrically conductive components of metal or the like. Tactile switches 40 corresponding to the operation buttons are coupled to the other side of the printed board 14, for example, a lower mounting surface of Fig 5. Although not show in the drawings, a control system IC (Integrated Circuit) and transmission components are coupled to the printed board 14.

The positive terminal component 20 includes a plate-shaped fixed portion 21, which is soldered and fixed to the printed board 14, and an arm 22, which is formed integrally with the fixed portion 21. The arm 22 includes a basal portion, which is bent to rise from the fixed portion 21. The arm 22, which is substantially arcuate, extends along the side surface of the button battery 15 and elastically supports the side surface of the button battery 15. The arm 22 includes a support hook 23, which supports the top face of the button battery 15. The support hook 23 may be two pieces that are bent toward the inner side from the arm 22 to face each other. The arm 22 includes a substantially U-shaped folded portion 24, which protrudes inward and forms a protruding surface near the distal end, and a bent end portion 25, which is continuous with the folded portion 24. At least one of the contacts of the positive terminal component 20 includes the folded portion 24. A slot 27 is formed on the positive terminal component 20. In the illustrated example, the slot 27 is formed at a location corresponding to the fixed portion 21 and the basal portion of the arm 22. The basal portion of the arm 22 may include a support hook 26, which supports the top face of the button battery 15. In the illustrated example, the support hook 26 extends across the slot 27 and is bent inward from the basal portion of the arm 22.

The negative terminal component 30 includes a fixed portion 31, which is soldered and fixed to the printed board 14, and a sloped flexible pieces 32, which are formed integrally formed with the fixed portion 31.

When the button battery 15 is mounted on the printed board 14, the bottom face of the button battery 15 contacts the distal portions of the flexible pieces 32 of the negative terminal component 30. The elastic force of the flexible piece 32 lifts the button battery 15 away from the printed board 14.

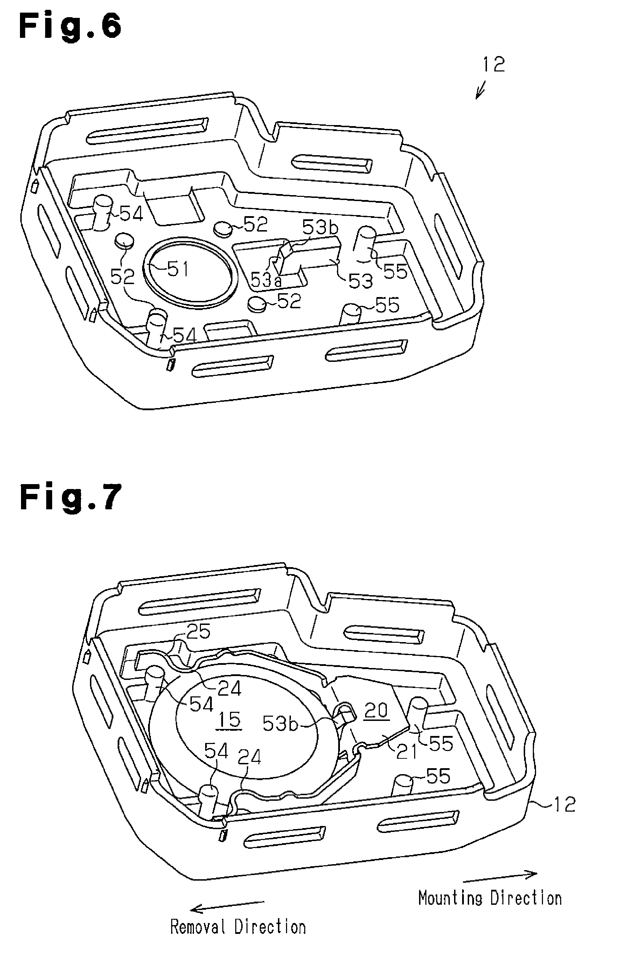

As shown in Figs. 6 to 8, battery supports 51 and 52 are formed at locations corresponding to the button battery 15 on the reverse side of the lower case 12. The battery support 51 may be a substantially annular projection, the diameter of which is smaller than the diameter of the button battery 15. The battery supports 52 may be a plurality of substantially circular projections, which are formed beside the battery support 51. The battery supports 51 and 52 have distal ends located at the same height. In the illustrated example, each battery support 52 corresponds to one of the four corners of a square on a virtual plane. The top face of the button battery 15, which is lifted by the elastic force of the flexible piece 32, is forced against the battery supports 51 and 52.

A battery brace 53 is formed at a location corresponding to the slot 27 of the positive terminal component 20 at the reverse side of the lower case 12. The battery brace 53 is received by the slot 27 of the positive terminal component 20 and located between the positive terminal component 20 and the button battery 15. The battery brace 53 includes a contact surface 53a, which contacts the side surface of the button battery 15. The battery brace 53 may be a plate-like projection. For example, the battery brace 53 may include an inclined guide surface 53b, which guides the button battery 15 to a final mounting position, where the side surface of the button battery 15 contacts the contact surface 53a. The battery brace 53 is one example of a non-conductive member.

Two pillars 54 are formed at the reverse side of the lower case 12. The pillars 54 are arranged at positions where the pillars 54 restrict movement of the button battery 15 from the final mounting position in a removal direction. The removal direction is an opposite direction to a mounting direction, in which the button battery 15 is directed toward the contact surface 53a. Each pillar 54 includes a distal portion, which contacts the mounting surface of the printed board 14. The pillars 54cooperate with two further pillars 55, which are arranged at certain positions, function as a printed board presser that presses the printed board 14 against the packing 13. Each pillar 54 is arranged in a space that is formed at the inner side of the bent end portion 25 of the positive terminal component 20. The transmission module 10 is one example of a battery holder.

A method for assembling the transmission module 10 will now be described.

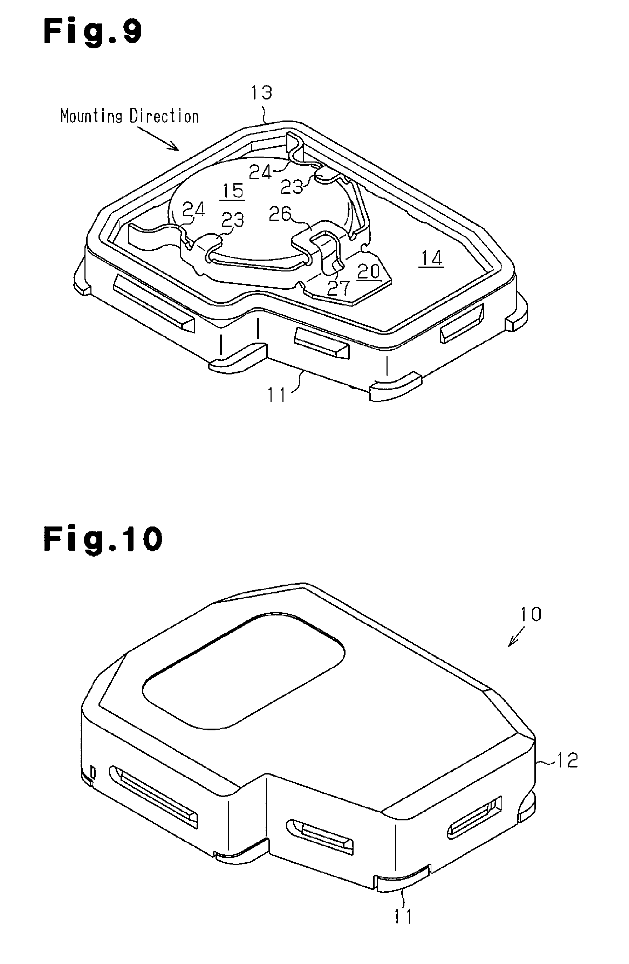

As shown in Fig. 9, the packing 13 is arranged inside the upper case 11. The printed board 14, to which various components such as the terminal components 20 and 30 are coupled, is mounted on the packing 13. Under this situation, the button battery 15 is mounted on the terminal components 20 and 30 through a gap between the bent end portions 25 in the mounting direction, which is indicated by the arrow. The bottom face of the button battery 15 elastically deforms the flexible pieces 32 of the negative terminal component 30. The button battery 15 is moved inward while avoiding interference between the top face of the button battery 15 and the support hooks 23 and 26. Under a temporary mounting condition in which the inward movement is completed, as shown in Fig. 5, the button battery 15 is lifted from the lower side by the elastic force of the flexible pieces 32 of the negative terminal component 30, and the top face of the button battery 15 is pushed against the support hooks 23 and 26 of the positive terminal component 20.

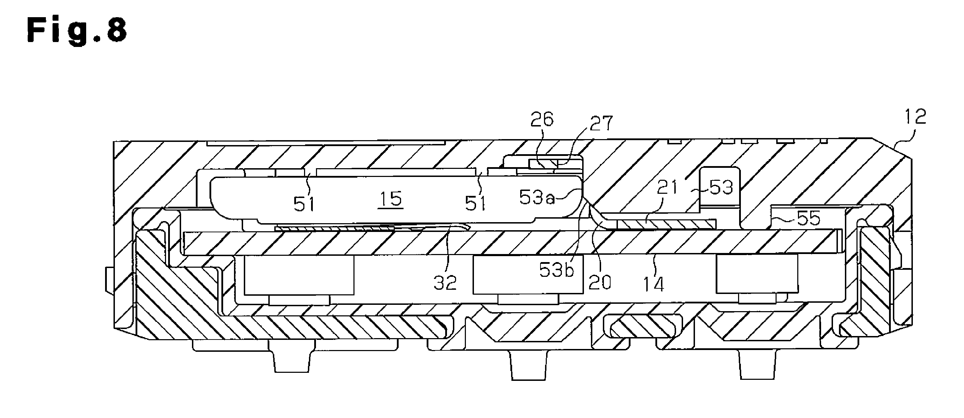

Then, the lower case 12 is coupled to the upper case 11 to cover the button battery 15. This completes the assembly of the transmission module 10, as shown in Fig. 10. When coupling the lower case 12, the battery brace 53 of the lower case 12 is received in the slot 27 of the positive terminal component 20, and the guide surface 53b of the battery brace 53 presses the edge of the top face of the button battery 15. As a result, the button battery 15 is pushed back in the removal direction, which is opposite to the mounting direction. When the coupling of the lower case 12 is completed, as shown in Fig. 8, the side surface of the button battery 15 contacts the contact surface 53a of the battery brace 53, and the button battery 15 is held at the final mounting position. As shown in Fig. 7, displacement of the button battery 15 to the removal direction is restricted by the pillars 54 of the lower case 12. As shown in Fig. 8, the top face of the button battery 15 contacts the battery supports 51 and 52 of the lower case 12. This separates the support hooks 23 and 26 of the positive terminal component 20 from the top face of the button battery 15. The bottom face (negative electrode) of the button battery 15 contacts the flexible pieces 32 of the negative terminal component 30, and a portion of the side surface (positive electrode) of the button battery 15 is elastically held between the folded portions 24 of the positive terminal component 20.

The operation of the battery holder will now be described.

When the transmission module 10 is dropped, solely or under a situation installed in the remote control key device 1, the button battery 15 may apply an impact load in the mounting direction to the battery holder. The impact load is received by the battery brace 53 of the lower case 12, which contacts the side surface of the button battery 15. Accordingly, direct application of the impact load to the positive terminal component 20 is avoided. This stably maintains the fixed portion 21 of the positive terminal component 20 and the mounting surface fastened to each other by solder.

As described above, the present embodiment has the advantages described below.
(1) Impact load in the mounting direction from the button battery 15 is received by the battery brace 53 arranged in the lower case 12, which is discrete from the positive terminal component 20. Thus, an impact load applies subtle stress to the fixed portion 21 of the positive terminal component 20. This decreases solder delamination from the fixed portion 21 or the mounting surface and limits separation of the positive terminal component 20 from the printed board 14. Accordingly, a battery holder having an increased impact resistance is obtained.
(2) When the lower case 12 is coupled to the upper case 11, the battery brace 53, which is received by the slot 27 of the positive terminal component 20, contacts the battery 15. Thus, when the coupling of the lower case 12 is completed, the contact surface 53a of the battery brace 53 can receive the impact load in the mounting direction from the battery 15.
(3) When coupling the lower case 12, the button battery 15, which is in the temporary mounting condition, is moved along the guide surface 53b of the battery brace 53. Then, the button battery 15 is guided to the final mounting position on the positive terminal component 20. Thus, the button battery 15 is smoothly guided to the final mounting position, and the button battery 15 is held at a position where the button battery 15 contacts the contact surface 53a of the battery brace 53.
(4) The pillars 54 restrict movement of the button battery 15 in the removal direction. Thus, the pillars 54 cooperate with the battery brace 53 to stably hold the button battery 15 at the final mounting position.
(5) The pillars 54 function to restrict movement of the button battery 15 in the removal direction and function to press the printed board 14 against the packing 13. This structure is superior compared to a structure that implements these functions with different members in that the battery holder uses less components and the battery holder is reduced in size and weight.
(6) Impact loads in the mounting direction from the battery 15 are not applied to the fixed portion 21. This extends the life of the fixed portion 21.
(7) The battery brace 53 is a part of the lower case 12. Thus, there is no need for an exclusive component dedicated to impact absorption. Accordingly, this structure is superior in that the number of components is reduced in the battery holder.
(8) When the button battery 15 is in the final mounting condition as shown in Fig. 8, the top face of the button battery 15 is pressed by the battery support 51 or the like of the lower case 12 and not by the support hook 26 or the like of the positive terminal component 20. Moreover, the button battery 15 contacts the folded portions 24 of the positive terminal component 20 and the flexible pieces 32 of the negative terminal component 30. The button battery 15 does not contact the terminal components 20 and 30 except for the folded portions 24 and the flexible pieces 32. Thus, while ensuring electrical connection between the terminal components 20 and 30 and the battery 15, subtle impact load is applied from the button battery 15 to the fixed portion 21 of the positive terminal component 20 or a weakened impact load is applied to the fixed portion 15,. This limits delamination of the fixed portion 21 from the mounting surface.

The above embodiment may be modified as described below.

In the embodiment, the support hook 26 may be omitted. In this case, the board brace 53 of the lower case 12 is received by the slot 27, which is formed in the portion rising from the fixed portion 21.

The total number of the support hooks 23 and 26 is not limited as long as the button battery 15 is supported from the upper side.

The positive terminal component 20 may be asymmetric at the left and right sides of to the fixed portion 21.

The positive terminal component 20 and the printed board 14 do not have to be fastened together through soldering. For example, the positive terminal component 20 may be fixed to the printed board by a mechanical fastening member, such as a screw. In this case, the lower case 12 receives impact loads from the button battery 15. This limits stress applied to the fixed portion 21 due to an impact load.

The battery is not limited to a button battery.

The terminal components 20 and 30 may be arranged on a board other than the printed board 14. The board may be a single-side mounting board or a multi-layered board. In the illustrated embodiment, the printed board 14 and the packing 13 may be omitted. In this case, the terminal components 20 and 30 are directly fixed to a mounting surface, which is arranged in the upper case 11, for example.

In the embodiment, the battery holder is included in the remote control key device 1. However, the battery holder may be used in an electronic device, which incorporates a battery, such as the button battery 15. The electronic device may or may not include operation buttons corresponding to usage. An example of an electronic device without operation buttons is a so-called a smart-key, which does not require manual operations to perform key verification through bidirectional communication with a vehicle.

The battery brace 53 may be a projection that is not plate-shaped as long as the battery brace 53 is received by the slot 27 of the terminal component 20 and located between the terminal component 20 and the battery 15 to receive impact loads from the battery.

The modifications may be combined.

## Claims

1. A battery holder that includes a battery, the battery holder comprising:
a terminal component electrically connected to one electrode of the battery, wherein the terminal component includes a fixed portion fixed to a mounting surface, an arm that extends from the fixed portion and contacts the electrode of the battery while supporting the battery, and a slot in the arm, wherein the slot is open toward the battery; and
a battery brace discrete from the terminal component, wherein the battery brace is received by the slot and located between the terminal component and the battery to receive an impact load from the battery.

2. The battery holder according to claim 1, wherein
the battery holder includes a case that covers the terminal component,
the battery brace is a plate-shaped projection formed in the case at a position corresponding to the slot of the terminal component, and
the battery brace includes a contact surface that contacts the battery to receive an impact load from the battery.

3. The battery holder according to claim 2, wherein the battery brace includes a guide surface that presses the battery to guide the battery from a temporary mounting position, where the battery does not contact the contact surface, to a final mounting position, where the battery contacts the contact surface.

4. The battery holder according to claim 3, wherein the case includes a pillar that restricts movement of the battery from the final mounting position in a removal direction.

5. The battery holder according to claim 4, further comprising a board including the mounting surface, wherein
the fixed portion of the terminal component is fixed to the mounting surface of the board,
and
the pillar includes a distal portion that contacts the mounting surface of the board.

6. A battery holder comprising:
a positive terminal component including a fixed portion, which is fixed to a mounting surface, and at least one contact, which contacts a positive electrode of a button battery; and
a non-conductive member discrete from the positive terminal component, wherein
the positive terminal component includes a slot that allows the non-conductive member to contact a side surface of the button battery at a location separated from the at least one contact, and
the non-conductive member projects toward the side surface of the button battery from the positive terminal component through the slot.

7. The battery holder according to claim 6, wherein the non-conductive member includes a contact surface that contacts the side surface of the button battery at a location separated from the at least one contact.

8. An electronic device comprising the battery holder according to any one of claims 1 to 7.

9. A remote control key device comprising the battery holder according to any one of claims 1 to 7.
